Europäisches Patentamt

European Patent Office

Office européen des brevets

(19)

(11) Veröffentlichungsnummer: **0 281 747**
**A2**

(12) **EUROPÄISCHE PATENTANMELDUNG**

(21) Anmeldenummer: **88101121.7**

(22) Anmeldetag: **26.01.88**

(51) Int. Cl.⁴: **G01V 9/04**

(30) Priorität: **12.03.87 DE 3707978**

(43) Veröffentlichungstag der Anmeldung:
**14.09.88 Patentblatt 88/37**

(84) Benannte Vertragsstaaten:
**BE DE ES FR GB IT NL SE**

(71) Anmelder: **Erwin Sick GmbH Optik-Elektronik**
**Sebastian-Kneipp-Strasse 1**
**D-7808 Waldkirch(DE)**

(72) Erfinder: **Pietzsch, Karl, Dr.**
**Richard-Wagner-Strasse 2**
**D-8192 Geretsried(DE)**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) **Lichtvorhang.**

(57) Ein Lichtvorhang weist eine von einer Elektronik
(22) periodisch durchgetastetes Leucht-oder Laser-
Diodenzeile (11) auf, die durch ein Objektiv (12) und
einen Hohlspiegel (14) telezentrisch vergrößert in die
Brennebene (15') des Hohlspiegels (14) abgebildet
wird. Ein im Abstand seiner Brennweite von der
Brennebene (15') auf der entgegengesetzten Seite
der Brennebene (15') wie der Hohlspiegel (14) angeordnetes streifenförmiges Linsenraster (16) schickt
kollimierte Lichtbündel (17) in die
Überwachungsstrecke (18).

Fig.1

## Lichtvorhang

Die Erfindung betrifft einen Lichtvorhang nach dem Oberbegriff des Patentanspruchs 1.

Bei derartigen bekannten Lichtvorhängen ist im allgemeinen ein Spiegelrad vorgesehen, welches einen auftreffenden Lichtstrahl periodisch über einen vorbestimmten Winkelbereich ablenkt und so die kontinuierliche Abtastung der Überwachungsstrecke gewährleistet. Nachteilig an derartigen Lichtvorhängen ist das Erfordernis des mit hoher Drehzahl umlaufenden Spiegelrades oder eines Dreh-oder Schwingspiegels.

Aus der DE-PS 28 24 311 ist nun bereits ein Lichtvorhang mit einem Lichtsender bekannt, der aus zehn in einer Reihe nebeneinander angeordneten Leuchtdioden besteht. Die Leuchtdioden des Lichtsenders werden durch eine elektrische Schaltung zyklisch angesteuert, so daß sie nacheinander zur Abgabe von Lichtblitzen erregt werden. Die Lichtblitze durchlaufen im wesentlichen parallel zueinander eine Überwachungsstrecke und treffen an deren Ende auf einen Empfangs-Hohlspiegel auf, in dessen Brennpunkt hinter einer Spaltblende ein photoelektrischer Empfänger angeordnet ist.

Hierbei dient der Hohlspiegel aber lediglich als Empfänger während für die zyklische Erzeugung des Fahrstrahls eine relativ lange Leuchtdiodenzeile erforderlich ist.

Wird bei diesem bekannten Lichtvorhang die Optik von Sender und Empfänger vertauscht, so wird das Licht von einer im Brennpunkt des Hohlspiegels angeordneten Lichtquelle ausgesandt, während einzelne in einer Linie angeordnete Empfangskollimatoren im gebündelten Strahlengang aus dem vom Hohlspiegel abgegebenen Bündel Licht empfangen und auf jeweils einen photoelektrischen Wandler konzentrieren, die dabei zyklisch betrieben werden.

Aus der DE-PS 29 34 554 ist ferner ein optoelektronisches Überwachungsgerät bekannt, das zur Erzeugung eines Fahrstrahls einen Laserlichtstrahl mittels einer periodisch arbeitenden Lichtablenkvorrichtung auf eine Empfangsvorrichtung ablenkt, die eine streifenförmige Fresnellinse umfaßt, in deren Brennpunkt ein photoelektrischer Empfänger angeordnet ist. Hierbei ist es wiederum nachteilig, daß eine mechanisch arbeitende Lichtablenkvorrichtung vorgesehen sein muß.

Aus der DE-PS 22 47 053 ist schließlich noch ein Lichtschrankengitter bekannt, das eine Vielzahl von Leuchtdioden umfaßt, von denen jede im Brennpunkt einer eigenen Sendelinse angeordnet ist.
Dabei sind die Sendelinsen dicht nebeneinander angeordnet, so daß sich eng aneinanderliegende parallele Überwachungslichtbündel ergeben.

Das Ziel der Erfindung besteht darin, einen Lichtvorhang der eingangs genannten Gattung zu - schaffen, der bei stabilem und einfachem Aufbau ohne mechanisch bewegte Teile auskommt, gleichwohl aber eine zumindest quasi-kontinuierliche Abtastung und Überwachung der Überwachungsstrecke gestattet.

Diese Aufgabe wird erfindungsgemäß durch die kennzeichnenden Merkmale des Patentanspruchs 1 gelöst.

Das wichtigste Element des so ausgebildeten Lichtvorhangs ist also eine Leucht-oder Laser-Diodenzeile in Form eines einzigen Chips. Demnach befinden sich alle Leuchtpunkte stabil und ortsfest auf einem einzigen kleinen Baustein und sind elektronisch einzeln ansteuerbar und überprüfbar. Die Einzeldioden werden durch die Elektronik sukzessive nacheinander angesteuert, wobei sich dieser Ansteuerungsvorgang periodisch wiederholt. Zu einem Zeitpunkt ist also jeweils nur eine Einzeldiode der Diodenzeile in Betrieb. Das Linsenraster bildet die telezentrisch vergrößerten Leuchtpunkte, der Diodenzeile ins Unendliche ab, d.h., daß kollimierte oder je nach Ausführung der Diodenzeile quasi-kollimierte Lichtbündel in der Überwachungsstrecke vorliegen. Durch geeignete elektronische Ansteuerung der Einzeldioden entsteht so ein Lichtvorhang mit einer Auflösung, die kleiner oder gleich der Querschnittsabmessung der einzelnen Lichtbündel auf der Überwachungsstrecke ist. Der Lichtvorhang ist also nur quasi-kontinuierlich und stellt - ein zeitlich getaktetes Lichtgitter dar. Wesentlich ist, daß für die Erzeugung der parallel zu sich selbst verschobenen Fahrstrahlen in der Überwachungsstrecke keinerlei mechanisch bewegte Bauelemente benötigt werden, da die Parallelverschiebung der Fahrstrahlen durch das nacheinander erfolgende Anregen der benachbarten Einzeldioden verwirklicht wird.

Nach einer ersten bevorzugten Ausführungsform ist vorgesehen, daß das Objektiv oder der zweite Hohlspiegel einen Durchmesser besitzt, der geringfügig größer als die Länge der Diodenzeile ist. Auf diese Weise wird gewährleistet, daß auch die von den am Ende der Diodenzeile befindlichen Einzeldioden ausgehenden Lichtbündel noch voll vom Objektiv oder zweiten Hohlspiegel erfaßt werden. Die Erstreckung des Objektivs oder des zweiten Hohlspiegels in Richtung der Diodenzeile wird durch den Winkel bestimmt, den das in die Überwachungsstrecke geschickte, von der Einzeldiode ausgehende Lichtbündel aufweisen soll. Im allgemeinen übersteigt die Ausdehnung des Objektivs oder des zweiten Hohlspiegels in Richtung der Diodenzeile deren Länge um 10 bis 30 und insbesondere etwa 20 %.

Um aus dem von jeder Einzeldiode ausgehenden Lichtbündel einen vorbestimmten Winkelbereich herauszuschneiden, sieht eine weitere Ausführungsform vor, daß in der Brennebene des ersten Hohlspiegels auf der optischen Achse des Objektivs und auf der von der Diodenzeile abgewandten Seite des Objektivs oder des zweiten Hohlspiegels eine Lochblende angeordnet ist, deren Durchmesser so bemessen ist,daß die vom ersten Hohlspiegel ausgesandten Lichtbündel im Bereich des Linsenrasters gerade einen Durchmesser entsprechend dem Durchmesser der Einzellinsen des Linsenrasters aufweisen. Mit anderen Worten wird durch diese Ausbildung die Anpassung des Lichtbündeldurchmessers an den Durchmesser der Einzellinsen des Linsenrasters gewährleistet. Die Auflösung des erfindungsgemäßen Lichtvorhangs bzw. Lichtgitters wird durch die Feinheit des Linsenrasters bestimmt; je kleiner die Einzellinsen des Linsenrasters sind, umso besser ist die Auflösung des Lichtvorhanges. Begrenzt ist die Auflösung durch die minimal erforderliche Lichtintensität, welche durch den Durchmesser der Einzellinsen des Linsenrasters bestimmt wird.

Eine praktische Ausführungsform kennzeichnet sich dadurch, daß das Objektiv oder der zweite Hohlspiegel ein Linsenstreifen bzw. Hohlspiegelstreifen ist, der sich in Richtung der Diodenzeile erstreckt. Auf diese Weise ist das Objektiv oder der zweite Hohlspiegel optimal an die Problematik der Abbildung einer Diodenzeile in die Brennebene des ersten Hohlspiegels angepaßt. Der Lichtempfang kann bei dem erfindungsgemäßen Lichtvorhang auf verschiedene Weise verwirklicht werden.

Eine erste Ausführungsform ist so ausgebildet, daß am Ende der Überwachungsstrecke eine streifenförmige Fresnellinse oder ein streifenförmiger Empfangshohlspiegel angeordnet ist, in deren bzw. dessen Brennebene eine Photoempfänger vorgesehen ist.

Eine zweite Ausführungsform sieht vor, daß am Ende der Überwachungsstrecke ein Retroreflektor und zwischen dem ersten Hohlspiegel und der Lochblende nahe der letztren ein Teilerspiegel angeordnet ist, der das in Autokollimation vom Retroreflektor zurückgeworfene Licht zu einem seitlich der Sendelichtbündel befindlichen Photoempfänger lenkt, der optisch sowohl bezüglich seiner Größe als auch seiner Lage der Lochblende entspricht.

Um den Sende-und den Empfangsstrahlengang voneinander zu entkoppeln, ist nach einer weiteren praktischen Ausführungsform vorgesehen, daß in der Ebene senkrecht zur Längserstreckung der Diodenzeile die Hauptstrahlen des auf den ersten Hohlspiegel auftreffenden Sendelichtbündels und des vom ersten Hohlspiegel reflektierten Sendelichtbündels einen solchen Winkel $\alpha$ miteinander einschließen, daß das vom ersten Hohlspiegel reflektierte Sendelichtbündel an der Lochblende, dem Objektiv oder dem zweiten Hohlspiegel und ggfs. dem Teilerspiegel gerade vorbeiläuft.

Der Winkel $\alpha$ liegt bei etwa 20 bis 30°. Aufgrund dieser Ausbildung liegt sowohl im objektivseitigen Strahlengang als auch im linsenrasterseitigen Strahlengang eine Brennebene des ersten Hohlspiegels vor, die einen stump fen Winkel miteinander einschließen.

Die Erfindung wird im folgenden beispielsweise anhand der Zeichnung beschrieben; in dieser zeigt:

Fig. 1 eine schematische Seitenansicht eines erfindungsgemäßen Lichtvorhanges,

Fig. 2 eine Draufsicht des Gegenstandes der Fig. 1 und

Fig. 3 eine andere Ausführungsform des Ausschnittes III in Fig. 2.

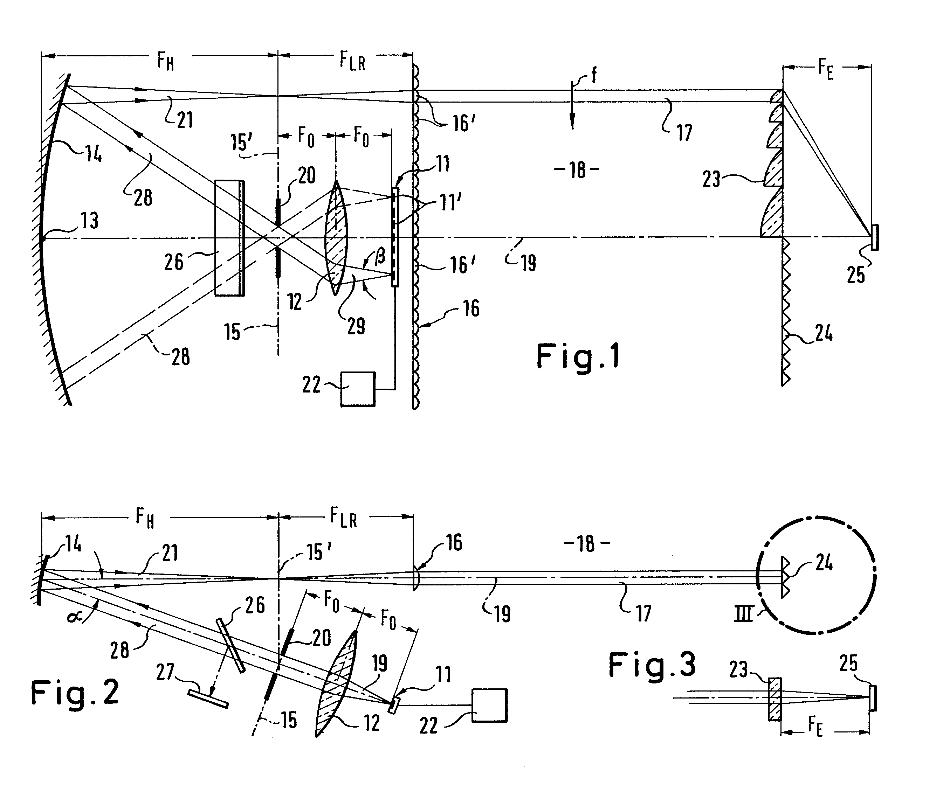

Nach den Fig. 1 und 2 ist eine Leucht-oder Laser-Diodenzeile 11 im Abstand $F_o$ von einem Objektiv 12 angeordnet, welches die aus den Fig. 1 und 2 ersichtliche, parallel zur Diodenzeile 11 verlaufende Streifenform besitzt und das von jeder Einzeldiode 11' ausgehende Lichtbündel 29 parallel richtet. Die Diodenzeile 11 ist symmetrisch und senkrecht zur optischen Achse 19 des Objektivs 12 angeordnet.

Auf der entgegengesetzten Seite des Objektivs 12 befindet sich ebenfalls im Abstand der Brennweite $F_o$ eine Lochblende 20, welche den Winkelausschnitt $\beta$ bestimmt, der von dem von jeder Einzeldiode ausgehenden Lichtbündel 29 für die Bildung des Lichtvorhangs ausgenutzt wird. Die Größe der Lochblende 20 bestimmt somit den Durchmesser des vom Objektiv 12 zu einem streifenförmigen, ersten Hohlspiegel 14 verlaufenden Parellellichtbündels 28. Der erste Hohlspiegel 14 ist im Abstand seiner Brennweite $F_H$ von der Lochblende 20 angeordnet, d.h., daß sich seine Brennebene 15 im wesentlichen in der Lochblende 20 befindet.

Die Verlängerung der optischen Achse 19 des Objektivs 12 trifft auf den Mittelpunkt 13 des streifenförmigen, ersten Hohlspiegels 14. Anstelle des Objektivs 12 kann auch ein entsprechender zweiter Hohlspiegel verwendet werden.

Die Diodenzeile 11 ist an eine Elektronik 22 angeschlossen, welche die Einzeldioden der Diodenzeile 11 sukzessive nacheinander zum Aufleuchten bringt, so daß auf der Diodenzeile 11 ein quasi von einem Ende zum anderen wandernder Lichtpunkt erzeugt wird. Hierdurch führt das Parallellichtbündel 28 auf der Oberfläche des ersten Hohlspiegels 14 eine Abtastbewegung aus, die sich zwischen den beiden in Fig. 1 in ausgezogenen und gestrichelten Linien beispielsweise wiedergegebenen Extremen erstreckt.

Die Parallellichtbündel 28 werden in der aus Fig. 1 ersichtlichen Weise durch den streifenförmigen, ersten Hohlspiegel 14 als reflektiertes Bündel 21 in der Brennebene 15' des Hohlspiegels 14 konzentriert, so daß dort vergrößerte Bilder der Einzeldioden der Diodenzeile 11 vorliegen.

Die Brennebene 15' ist gegenüber der Brennebene 15 gemäß Fig. 2 etwas abgeknickt, weil der erste Hohlspiegel 14 um eine senkrecht auf der Ebene der Fig. 2 stehende Achse etwas in der Weise gekippt ist, daß der Hauptstrahl des Sende-Parallellichtbündels 28 mit dem Hauptstrahl des reflektierten Bündels 21 einen Winkel $\alpha$ von etwa 20° einschließt.

Hinter der Brennebene 15' des ersten Hohlspiegels 14 ist parallel zum ersten Hohlspiegel 14 ein streifenförmiges Linsenraster 16 angeordnet, wobei der Abstand des Linsenrasters 16 von der Brennebene 15' gleich der Brennweite $F_{LR}$ der Einzellinsen 16' des Linsenrasters 16 ist. Der Durchmesser der Einzellinsen 16' ist in der Weise auf den Durchmesser der Lochblende 20 abgestimmt, daß die Lichtbündel 21 jeweils gerade eine Einzellinse 16' im wesentlichen ausleuchten.

Nach den Fig. 1 und 2 sind die verschiedenen Brennweiten $F_o$, $F_H$ und $F_{LR}$ so gewählt, daß sich die Diodenzeile 11 und das Linsenraster 16 in etwa auf gleicher Höhe befinden, so daß die gesamte Lichtsendeanordnung bequem in einem gemeinsamen Gehäuse untergebracht werden kann.

Aus dem Linsenraster 16 tritt in die dahinter befindliche Überwachungsstrecke 18 ein Parallelfahrstrahl 17 aus, der senkrecht zur Ebene des Linsenrasters 16 verläuft und die Überwachungsstrecke 18 in Richtung des Pfeiles f quasi-kontinuierlich überstreicht. Tatsächlich wird der in jedem Augenblick vorhandene Fahrstrahl 17 jeweils durch eine einzige der Einzeldioden 11' der Diodenzeilen 11 erzeugt. Es erfolgt also tatsächlich ein diskontinuierliches Weiterschalten von einem Fahrstrahl 17 zum benachbarten, was aber bei einer geeigneten möglichst geringen Abmessung jedes einzelnen Fahrstrahls 17 auf einen quasi-kontinuierlichen Abtastvorgang hinausläuft.

Am Ende der Überwachungsstrecke kann sich nach der Darstellung in der oberen Hälfte der Fig. 1 und nach Fig. 3 eine Fresnellinse 23 befinden, welche ebenfalls streifenförmig ausgebildet ist und das empfangene Licht auf einem Photoempfänger 25 konzentriert, der im Abstand der Brennweite $F_E$ der Fresnellinse 23 von dieser angeordnet ist. Statt der Fresnellinse 23 könnte auch ein streifenförmiger Hohlspiegel vorgesehen sein, wobei dann der Photoempfänger 25 auf der entgegengesetzten Seite wie in Fig. 1 dargestellt anzuordnen wäre. Das elektrische Ausgangssignal des Photoempfängers 25 kann beispielsweise zur Feststellung einer Unterbrechung der Überwachungsstrecke 18 durch einen Gegenstand herangezogen werden.

Nach einer weiteren Ausführungsform, die in der unteren Hälfte der Fig. 1 und in Fig. 2 dargestellt ist, kann man am Ende der Überwachungsstrecke auch einen streifenförmigen Retroreflektor 24 vorsehen, der das auftreffende Licht in sich selbst zurückwirft, so daß es in Autokollimation über den streifenförmigen, ersten Hohlspiegel 14 zu einem Teilerspiegel 26 gelangt, der zwischen dem ersten Hohlspiegel 14 und der Lochblende 20 nahe der letzteren vorzugsweise unter einem Winkel von 45° im Parallellichtbündel 28 angeordnet ist und das vom Retroreflektor 24 zurückgeworfene Licht zu einem Photoempfänger 27 ausspiegelt. Der Photoempfänger 27 ist optisch an der Stelle der Lochblende 20 angeordnet und weist im wesentlichen dieselbe Fläche wie das Loch der Lochblende 20 auf. Das elektrische Signal des Photoempfängers 27 kann ebenfalls zur Feststellung von Unterbrechungen der Überwachungsstrecke ausgenutzt werden.

Ein weiterer Vorteil der Erfindung besteht darin, daß die Diodenzeile, die in sich bereits justiert ist, lediglich als Ganzes relativ zu den anderen optischen Bauelementen justiert werden muß.

## Ansprüche

1. Lichtvorhang mit einer periodisch arbeitenden Lichtsendeanordnung, einem sich über die Breite der Überwachungsstrecke erstreckenden streifenförmigen, ersten Hohlspiegel, der Lichtbündel aus unterschiedlichen Richtungen von der Lichtsendeanordnung empfängt und daraus parallel zueinander verschobene Fahrstrahlen erzeugt, die die Überwachungsstrecke periodisch abtasten, und mit einer photoelektrischen Lichtempfangsanordnung, die das durch die Überwachungsstrecke hindurchgegangene Licht empfängt und ein entsprechendes elektrisches Signal abgibt, dadurch **gekennzeichnet,** daß die Lichtsendeanordnung eine von einer Elektronik (22) periodisch durchgetastete Leucht-oder Laser-Diodenzeile (11) umfaßt, die durch ein Objektiv (12) oder einen zweiten Hohlspiegel, in dessen Brennebene sich die Diodenzeile (11) befindet, und den ersten Hohlspiegel (14) telezentrisch vergrößert in die Brennebene (15') des ersten Hohlspiegels (14) abgebildet wird und daß ein im Abstand seiner Brennweite ($F_{LR}$) von der Brennebene (15') auf der entgegengesetzten Seite der Brennebene (15') wie der erste Hohlspiegel (14) angeordnetes streifenförmiges Linsenraster (16) kollimierte bzw. quasi-kollimierte Lichtbündel (17) in die Überwachungsstrecke (18) schickt.

2. Lichtvorhang nach Anspruch 1, dadurch **gekennzeichnet,** daß das Objektiv (12) oder der zweite Hohlspiegel einen Durchmesser besitzt, der geringfügig größer als die Länge der Diodenzeile (11) ist.

3. Lichtvorhang nach Anspruch 1 oder 2, dadurch **gekennzeichnet,** daß in der Brennebene (15) des ersten Hohlspiegels (14) auf der optischen Achse (19) des Objektivs (12) oder des zweiten Hohlspiegels und auf der von der Diodenzeile (11) abgewandten Seite des Objektivs (12) oder des zweiten Hohlspiegels eine Lochblende (20) angeordnet ist, deren Durchmesser so bemessen ist, daß die vom ersten Hohlspiegel (14) ausgesandten Lichtbündel (21) im Bereich des Linsenrasters (16) gerade einen Durchmesser entsprechend dem Durchmesser der Einzellinsen (16') des Linsenrasters (16) aufweisen.

4. Lichtvorhang nach einem der vorhergehenden Ansprüche, dadurch **gekennzeichnet,** daß das Objektiv (12) oder der zweite Hohlspiegel ein Linsenstreifen bzw. Hohlspiegelstreifen ist, der sich in Richtung der Diodenzeile (11) erstreckt.

5. Lichtvorhang nach einem der vorhergehenden Ansprüche, dadurch **gekennzeichnet,** daß am Ende der Überwachungsstrecke (18) eine streifenförmige Fresnellinse (23) oder ein streifenförmiger Empfangshohlspiegel angeordnet ist, in deren bzw. dessen Brennebene ein Photoempfänger (25) vorgesehen ist.

6. Lichtvorhang nach einem der Ansprüche 1 bis 4, dadurch **gekennzeichnet,** daß am Ende der Überwachungsstrecke (18) ein Retroreflektor (24) und zwischen dem ersten Hohlspiegel (14) und der Lochblende (20) nahe der letzteren ein Teilerspiegel (26) angeordnet ist, der das in Autokollimation vom Retroreflektor (24) zurückgeworfene Licht zu einem seitlich der Sendelichtbündel (28) befindlichen Photoempfänger (27) lenkt, der optisch sowohl bezüglich seiner Größe als auch seiner Lage der Lochblende (20) entspricht.

7. Lichtvorhang nach einem der vorhergehenden Ansprüche, dadurch **gekennzeichnet,** daß in der Ebene (Fig. 2) senkrecht zur Längserstreckung der Diodenzeile (11) die Hauptstrahlen des auf den ersten Hohlspiegel (14) auftreffenden Sendelichtbündels (18) und des vom ersten Hohlspiegel (14) reflektierten Sendelichtbündels (21) einen solchen Winkel ($\alpha$) miteinander einschließen, daß das vom ersten Hohlspiegel (14) reflektierte Sendelichtbündel (21) an der Lochblende (20), dem Objektiv (12) oder dem zweiten Hohlspiegel und ggfs. dem Teilerspiegel (26) gerade vorbeiläuft.

Fig.1

Fig.2

Fig.3

0 281 747